# EUROPEAN PATENT APPLICATION

(11) **EP 4 834 579 A1**
(43) Date of publication of application: **04.11.2026**
(21) Application number: 24913008.9
(22) Date of filing: 26.12.2024
(51) Int. Cl.: B32B 7/022, B05D 1/36, B05D 7/24, B32B 27/26, B32B 27/30, B32B 27/40, C09D 175/04

(54) **THERMOSETTING RESIN SHEET, VEHICLE, VEHICLE PART, AND METHOD FOR MANUFACTURING VEHICLE AND VEHICLE PART**

(30) Priority: 26.12.2023 JP 2023220060
(71) Applicant: Sekisui Chemical Co., Ltd., Osaka-shi, Osaka 530-8565 (JP)
(72) Inventor: NATOU, Hiroaki, Mishima-gun, Osaka 618-0021 (JP); NAKADATE, Junichi, Mishima-gun, Osaka 618-0021 (JP); YASUI, Hidefumi, Mishima-gun, Osaka 618-0021 (JP)
(74) Representative: Ter Meer und Partner mbB
(86) International application number: PCT/JP2024/046161
(87) International publication number: WO 2025/143122

(57) **Abstract**

The present invention is a thermosetting resin sheet (1) having, at least, a top coat layer (10) formed of a first thermosetting resin composition and a resin layer (20) formed of a second thermosetting resin composition,
wherein the logarithm of the dynamic loss tangent at 25°C of the thermosetting resin sheet (1) measured using a dynamic viscoelasticity analyzer is 1 or lower;
the first thermosetting resin composition includes a first polyol resin and a first curing agent;
the second thermosetting resin composition includes a second polyol resin and a second curing agent;
the peak intensity ratio of a second peak having an absorption maximum in the 3,520 ± 30 cm⁻¹ range of the top coat layer (10) to a peak intensity of a first peak having an absorption maximum in the 2,920 ± 20 cm⁻¹ range in the total reflection infrared absorption spectrum of the top coat layer (10) is 0.15 or higher and 0.60 or lower; and
the peak intensity ratio of a third peak having an absorption maximum in the 1,460 ± 20 cm⁻¹ range of the top coat layer (10) to the peak intensity of the second peak is 6.0 or higher and 20.0 or lower. The vehicle of the present invention and the vehicle component of the present invention are those coated with the thermosetting resin sheet (1) of the present invention. The method for manufacturing the vehicle of the present invention and the method for manufacturing the vehicle component of the present invention include a process of coating using the thermosetting resin sheet of the present invention.

## Description

### Technical Field

The present invention relates to a thermosetting resin sheet, a vehicle and a vehicle component coated with the thermosetting resin sheet, and methods for manufacturing the vehicle and the vehicle component.

### Background Art

Exteriors of vehicles and the like are coated with coating materials. The coating is generally formed by spray coating a coating material for a colored resin layer, thereafter overcoating a coating material for a top coat layer, and heat drying the resultant. The top coat layers are required to have a certain degree of hardness to protect the vehicles from external factors; and it is known that in order to raise the hardness, the hydroxyl value is made high (see, for example, PTL1).

As covering sheets to be used by being bonded and thermoset on the surface of articles such as household furniture and steel sheets for protection, decoration, display and the like thereof, thermosetting covering sheets are known as a conventional technology in which a colored resin layer in an uncured state is layered on a transparent top coat layer in an uncured state (see, for example, PTL2).

### Citation List

### Patent Literature

PTL1: JP 2022-78487 A
PTL2: JP 02-223445 A

### Summary of Invention

### Technical Problem

In the case of conventional spray coating and conventional thermosetting covering sheets, however, there are cases where a resin layer such as a colored resin layer and a top coat layer are compatibilized, lowering the hardness of the top coat layer.

Then, the present invention has an object to provide a thermosetting resin sheet capable of enhancing the hardness of a top coat layer by suppressing the compatibilization between a resin layer and the top coat layer, a vehicle and a vehicle component coated with the thermosetting resin sheet, and methods for manufacturing the vehicle and the vehicle component.

### Solution to Problem

As a result of exhaust studies, the present inventors have found that by focusing attention to the logarithm (log(tan δ)) of the dynamic loss tangent in dynamic viscoelasticity of a thermosetting resin sheet and the total reflection infrared absorption spectrum of a top coat layer of the thermosetting resin sheet, the above problem can be solved; and this finding has led to the completion of the present invention. The gist of the present invention is as follows.
[1] A thermosetting resin sheet, at least comprising a top coat layer formed of a first thermosetting resin composition and a resin layer formed of a second thermosetting resin composition,
   wherein the logarithm (log(tan δ)) of the dynamic loss tangent at 25°C of the thermosetting resin sheet measured by viscoelasticity measurement using a dynamic viscoelasticity analyzer (DMA) is 1 or lower;
   the first thermosetting resin composition comprises a first polyol resin and a first curing agent;
   the second thermosetting resin composition comprises a second polyol resin and a second curing agent;
   the peak intensity ratio (Pt2/Pt1) of a peak intensity (Pt2) of a second peak having an absorption maximum in the 3,520 ± 30 cm⁻¹ range in a total reflection infrared absorption spectrum of the top coat layer to a peak intensity (Pt1) of a first peak having an absorption maximum in the 2,920 ± 20 cm⁻¹ range in the total reflection infrared absorption spectrum of the top coat layer is 0.15 or higher and 0.60 or lower; and
   the peak intensity ratio (Pt3/Pt2) of a peak intensity (Pt3) of a third peak having an absorption maximum in the 1,460 ± 20 cm⁻¹ range in the total reflection infrared absorption spectrum of the top coat layer to the peak intensity (Pt2) of the second peak in the total reflection infrared absorption spectrum of the top coat layer is 6.0 or higher and 20.0 or lower.
[2] The thermosetting resin sheet according to the above [1], wherein the peak intensity ratio (Pc2/Pc1) of a peak intensity (Pc2) of a second peak having an absorption maximum in the 3,520 ± 30 cm⁻¹ range in a total reflection infrared absorption spectrum of the resin layer to a peak intensity (Pc1) of a first peak having an absorption maximum in the 2,920 ± 20 cm⁻¹ range in the total reflection infrared absorption spectrum of the resin layer is 0.05 or higher and 0.35 or lower.
[3] The thermosetting resin sheet according to the above [2], wherein the second thermosetting resin composition further comprises a colorant.
[4] The thermosetting resin sheet according to any one of the above [1] to [3], wherein weight-average molecular weights of the first polyol resin and the second polyol resin are each 50,000 or higher and 1,000,000 or lower.
[5] The thermosetting resin sheet according to any one of the above [1] to [4], wherein the first polyol resin and the second polyol resin each comprise at least a (meth)acrylic resin having a plurality of hydroxyl groups.
[6] The thermosetting resin sheet according to any one of the above [1] to [5], wherein reaction initiation temperatures of the first curing agent and the second curing agent are each 180°C or lower.
[7] A vehicle, being coated with a thermosetting resin sheet according to any one of the above [1] to [6].
[8] A vehicle component, being coated with a thermosetting resin sheet according to any one of the above [1] to [6].
[9] A method for manufacturing a vehicle, comprising a process of coating with a thermosetting resin sheet according to any one of the above [1] to [6].
[10] A method for manufacturing a vehicle component, comprising a process of coating with a thermosetting resin sheet according to any one of the above [1] to [6].

### Advantageous Effects of Invention

According to the present invention, a thermosetting resin sheet capable of enhancing the hardness of a top coat layer by suppressing the compatibilization between a resin layer and the top coat layer, and a vehicle and a vehicle component coated with the thermosetting resin sheet can be provided.

### Brief Description of Drawings

[Fig. 1] Fig. 1 is a schematic sectional view showing one example of the thermosetting resin sheet of the present invention.
[Fig. 2] Fig. 2 is a schematic sectional view showing one example of the thermosetting resin sheet of the present invention.
[Fig. 3] Fig. 3 is a schematic sectional view showing one example of the thermosetting resin sheet of the present invention.

### Description of Embodiments

### [Thermosetting resin sheet]

The thermosetting resin sheet of the present invention has, at least, a top coat layer comprising a first thermosetting resin composition and a resin layer formed of a second thermosetting resin composition. Then, the first thermosetting resin composition in the thermosetting resin sheet of the present invention contains a first polyol resin and a first curing agent; and the second thermosetting resin composition in the thermosetting resin sheet of the present invention contains a second polyol resin and a second curing agent. The thermosetting resin sheet of the present invention may consist of the top coat layer and the resin layer, or may have, in addition to the top coat layer and the resin layer, other layers.

### (Thermosetting resin compositions)

The first thermosetting resin composition contains a first polyol resin; and the second thermosetting resin composition contains a second polyol resin. The polyol resin contained in the first thermosetting resin composition may be identical to or may be different from the polyol resin in the second thermosetting resin composition. The first polyol resin and the second polyol resin refer to polyol resins contained in the first thermosetting resin composition and the second thermosetting resin composition, respectively. Hence, in the case where the first thermosetting resin composition contains plural kinds of polyol resins, the plural kinds thereof are put together and treated as the first polyol resin; and in the case where the second thermosetting resin composition contains plural kinds of polyol resins, the plural kinds thereof are put together and treated as the second polyol resin.

### <Polyol resins>

Examples of the first polyol resin and the second polyol resin include (meth)acrylic polyol resins, polycarbonate polyol resins, polyester polyol resins, and epoxy resin-modified polyol resins; and among these, (meth)acrylic polyol resins are preferable.

The weight-average molecular weights of the first polyol resin and the second polyol resin are each preferably 50,000 or higher and 1,000,000 or lower. When the weight-average molecular weight of the first polyol resin and the second polyol resin is 50,000 or higher and 1,000,000 or lower, it becomes easy for the coatability, the curability, the tackiness, the extensibility and the like of the top coat layer and the resin layer to be made favorable in a well-balanced manner. From such a viewpoint, the weight-average molecular weight of the first polyol resin and the second polyol resin is more preferably 60,000 or higher and 800,000 or lower, still more preferably 70,000 or higher and 600,000 or lower and further still more preferably 80,000 or higher and 600,000 or lower. In the present description, the weight-average molecular weight is measured by gel permeation chromatography (GPC), and is determined as values in terms of standard polystyrenes. The weight-average molecular weights of the first polyol resin and the second polyol resin may be identical or may be different.

The hydroxyl value of the first polyol resin is preferably 50 mgKOH/g or higher and 300 mgKOH/g or lower. When the hydroxyl value of the first polyol resin is 50 mgKOH/g or higher, the hardness of the top coat layer can be made high further. When the hydroxyl value of the first polyol resin is 300 mgKOH/g or lower, the adhesive strength of the top coat layer to the resin layer can be made high further. From such a viewpoint, the hydroxyl value of the first polyol resin is more preferably 60 mgKOH/g or higher and 250 mgKOH/g or lower and still more preferably 70 mgKOH/g or higher and 220 mgKOH/g or lower. On the other hand, the hydroxyl value of the second polyol resin is preferably 10 mgKOH/g or higher and 250 mgKOH/g or lower. When the hydroxyl value of the second polyol resin is 10 mgKOH/g or higher, the strength of the resin layer can be made high further. When the hydroxyl value of the second polyol resin is 250 mgKOH/g or lower, the tack strength of the resin layer to a plate to be coated can be made high further. From such a viewpoint, the hydroxyl value of the second polyol resin is more preferably 20 mgKOH/g or higher and 200 mgKOH/g or lower and still more preferably 30 mgKOH/g or higher and 180 mgKOH/g or lower.

In the case where the first thermosetting resin composition and the second thermosetting resin composition contain plural kinds of polyol resins, hydroxyl values of the first polyol resin and the second polyol resin are each a weighted average of hydroxyl values of polyol resins contained in each thermosetting resin composition. For example, in the case of using two kinds of a polyol resin (d1) and a polyol resin (d2) as polyol resins, with the hydroxyl value of the polyol resin (d1) being represented by X₁, the blend ratio thereof being represented by m₁, the hydroxyl value of the polyol resin (d2) being represented by X₂, and the blend ratio thereof being represented by m₂, the weighted average of the hydroxyl values is represented by the following expression. The blend ratio is a value in terms of mass. 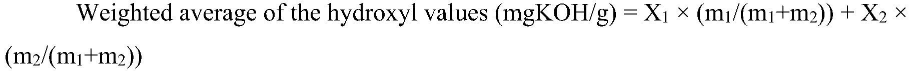 Weighted average of the hydroxyl values (mgKOH/g) = X1 × (m1/(m1+m2)) + X2 × (m2/(m1+m2))

The hydroxyl value can be measured according to JIS K1557-1:2007.

It is preferable that the first polyol resin and the second polyol resin each contain a (meth)acrylic resin having a plurality of hydroxyl groups. That is, the first polyol resin and the second polyol resin are each preferably a (meth)acrylic polyol resin. In the first polyol resin and the second polyol resin each, the number of hydroxyl groups is not especially limited as long as it is two or more.

The (meth)acrylic resin may have functional groups other than hydroxyl groups. Examples of the functional groups other than hydroxyl groups include an amino group and a carboxyl group.

The (meth)acrylic resin ((meth)acrylic polyol resin) is preferably an acrylic polymer obtained by polymerizing a monomer mixture containing a (meth)acrylate ester monomer and a monomer containing a functional group having a hydroxyl group. Such an acrylic polymer can be made to contain hydroxyl groups by the hydroxyl group-containing monomer. The (meth)acrylic means methacrylic or acrylic, and the same applies to other similar terms.

The (meth)acrylate ester monomer includes (meth)acrylate ester monomers having no functional groups, and examples thereof include alkyl (meth)acrylates whose alkyl group has 1 or more and 18 or less carbon atoms, such as methyl (meth)acrylate and ethyl (meth)acrylate, (meth)acrylates having an aromatic ring, such as benzyl (meth)acrylate and phenoxydiethylene glycol (meth)acrylate, and 2-ethoxyethyl (meth)acrylate.

The hydroxyl group-containing monomer is not especially limited, and includes (meth)acrylate ester monomers having a hydroxyl group, and examples thereof include 2-hydroxyethyl (meth)acrylate.

The monomer mixture may contain monomers containing a functional group other than a hydroxyl group, styrene derivative monomers or the like, other than the above-mentioned (meth)acrylate ester monomers and hydroxyl group-containing monomers. By using, in addition to the hydroxyl group-containing monomer, a monomer containing a functional group other than a hydroxyl group, such as an amino group or a carboxyl group, the functional group other than a hydroxyl group, in addition to the hydroxyl group, can be introduced to the (meth)acrylic resin. The amino group-containing monomer is not especially limited, and includes (meth)acrylate ester monomers having an amino group, and examples thereof include 2-aminoethyl (meth)acrylate. The carboxyl group-containing monomer is not especially limited, and examples thereof include (meth)acrylic acid.

The styrene derivative monomer is not especially limited, and examples thereof include styrene, α-methylstyrene, α-ethylstyrene, p-methylstyrene, p-methoxystyrene, p-phenylstyrene, p-ethoxystyrene, p-chlorostyrene, m-chlorostyrene, and o-chlorostyrene.

The (meth)acrylic resin to be used may be a copolymer obtained by block or graft polymerizing the above-mentioned acrylic polymer with other monomers or polymers. In this case, the other monomers or polymers include acryl-based, styrene-based, maleic acid-based, imide-based, silicone-based and fluorine-based monomers and polymers of these monomers.

The content of the first polyol resin in the first thermosetting resin composition and the content of the second polyol resin in the second thermosetting resin composition are each preferably 20% by mass or higher and 80% by mass or lower, more preferably 30% by mass or higher and 70% by mass or lower and still more preferably 35% by mass or higher and 60% by mass or lower. The content of the first polyol resin in the first thermosetting resin composition may be identical to or may be different from the content of the second polyol resin in the second thermosetting resin composition.

There are cases where the thermosetting resin composition is diluted with a volatile component such as a solvent as described later, but in the present description, the content (% by mass) of each component in the thermosetting resin composition means a value in terms of solid content excluding the volatile component.

The first thermosetting resin may contain thermosetting resins other than the first polyol resin; and the second thermosetting resin may contain thermosetting resins other than the second polyol resin, in the range of not impairing the advantageous effects of the present invention. Examples of the thermosetting resins other than the first polyol resin and the thermosetting resins other than the second polyol resin include (meth)acrylic resins other than the polyol resins, polycarbonate resins other than the polyol resins, polyester resins other than the polyol resins, and epoxy resins other than the polyol resins. These thermosetting resins can be used singly, or in a combination of two or more.

### <Curing agents>

The first thermosetting resin composition contains a first curing agent; and the second thermosetting resin composition contains a second curing agent.

The first curing agent and the second curing agent are each preferably a blocked isocyanate curing agent. The blocked isocyanate curing agent is a compound in which an isocyanate group is blocked with a blocking group; the blocked isocyanate group, on being exposed to a high temperature, thermally dissociates and releases the blocking group (blocking moiety) to regenerate the isocyanate group, causing a curing reaction between the isocyanate group and a functional group (typically, a hydroxyl group of the polyol resin) in the above-mentioned thermosetting resin.

The blocked isocyanate curing agent can be obtained, for example, by reacting an isocyanate compound having two or more isocyanate groups in one molecule with a blocking agent.

The isocyanate compound having two or more isocyanate groups in one molecule is not especially limited, and examples thereof include tolylene diisocyanate, diphenylmethane diisocyanate, hexamethylene diisocyanate, pentamethylene diisocyanate, isophorone diisocyanate, xylylene isocyanate, hydrogenated xylylene isocyanate, and modified products of these.

Examples of the blocking agent include pyrazole, phenols, oximes, lactams, and malonate esters.

The above blocked isocyanate curing agent may be used singly, or in combination of two or more. The first curing agent and the second curing agent may be identical or may be different.

In the case where the first curing agent and the second curing agent are blocked isocyanate curing agents, reaction initiation temperatures of the first curing agent and the second curing agent are each preferably 180°C or lower. The reaction initiation temperature is a temperature (thermal dissociation temperature) at which a blocked isocyanate curing agent dissociates to form an isocyanate group. When the reaction initiation temperatures of the first curing agent and the second curing agent are each 180°C or lower, it is preferable because the thermosetting resin sheet can be cured at a relatively low temperature. From the viewpoint of curing the thermosetting resin sheet at a low temperature, the reaction initiation temperatures of the first curing agent and the second curing agent are each more preferably 160°C or lower and still more preferably 140°C or lower. Further, from the viewpoint of the storage stability of the thermosetting resin sheet, the reaction initiation temperatures of the first curing agent and the second curing agent are each preferably 40°C or higher and more preferably 60°C or higher. The reaction initiation temperature can be measured, for example, by evaluating a gel fraction after a blocked isocyanate is mixed with a resin, for example, a polyol resin, high in reactivity with isocyanate, in an equivalent amount, and stirred for 6 hours at a predetermined temperature.

In the case where the first curing agent and the second curing agent are blocked isocyanate curing agents, with regard to the content of the first curing agent in the first thermosetting resin composition and the content of the second curing agent in the second thermosetting resin composition, it suffices if the number of the functional group in the thermosetting resin with respect to the number of the isocyanate group in the curing agent is regulated so as to be preferably 0.4 or larger and 1.8 or smaller and more preferably 0.6 or larger and 1.5 or smaller.

In the case where the first curing agent and the second curing agent are blocked isocyanate curing agents, the content of the first curing agent in the first thermosetting resin composition and the content of the second curing agent in the second thermosetting resin composition are not especially limited as long as the ratio of the number of the functional group with respect to the number of the isocyanate group is regulated so as to be in the above range, and the contents are each preferably 20% by mass or higher and 80% by mass or lower, more preferably 30% by mass or higher and 70% by mass or lower and still more preferably 40% by mass or higher and 60% by mass or lower. The content of the first curing agent in the first thermosetting resin composition may be identical to or may be different from the content of the second curing agent in the second thermosetting resin composition.

### <Plasticizer>

The first thermosetting resin composition and the second thermosetting resin composition may contain a plasticizer. It is preferable that in particular, the second thermosetting resin composition contain a plasticizer. The plasticizer is preferably a (meth)acrylic polymer. Examples of the (meth)acrylic polymer to be used as the plasticizer include (meth)acrylic polymers having no functional groups, (meth)acrylic polymers having hydroxyl groups, (meth)acrylic polymers having carboxyl groups, (meth)acrylic polymers having epoxy groups, and (meth)acrylic polymers having alkoxysilyl groups. These (meth)acrylic polymers can be used singly, or in combination of two or more. Among these (meth)acrylic polymers, (meth)acrylic polymers having hydroxyl groups are preferable.

The weight-average molecular weight of the (meth)acrylic polymer to be used as the plasticizer is preferably 200 or higher and 8,000 or lower, more preferably 300 or higher and 6,000 or lower and still more preferably 400 or higher and 4,000 or lower.

The glass transition temperature of the (meth)acrylic polymer to be used as the plasticizer is preferably 10°C or lower and more preferably -80°C or higher and 0°C or lower.

The hydroxyl value of the (meth)acrylic polymer to be used as the plasticizer is preferably 20 mgKOH/g or higher and 250 mgKOH/g or lower, more preferably 40 mgKOH/g or higher and 200 mgKOH/g or lower and still more preferably 60 mgKOH/g or higher and 150 mgKOH/g or lower.

In the case where the first thermosetting resin composition and the second thermosetting resin composition contain a plasticizer, the content of the plasticizer in the thermosetting resin composition is, based on 100 parts by mass of the total content of the polyol resin, the curing agent and the plasticizer, preferably 1 part by mass or higher and 40 parts by mass or lower, more preferably 5 parts by mass or higher and 30 parts by mass or lower and still more preferably 7 parts by mass or higher and 20 parts by mass or lower.

The plasticizer in the first thermosetting resin composition may be identical to or may be different from the plasticizer in the second thermosetting resin composition. The content of the plasticizer in the first thermosetting resin composition may be identical to or may be different from the content of the plasticizer in the second thermosetting resin composition.

### (Ratio of the content of the curing agent to the total content of the polyol resin and the plasticizer)

The ratio (first curing agent/(first polyol resin + plasticizer)) of the content of the first curing agent in the first thermosetting resin composition to the total content of the first polyol resin and the plasticizer therein is preferably 0.3 to 3.0. When the above content ratio (first curing agent/(first polyol resin + plasticizer)) is 0.3 to 3.0, it becomes easy for the above peak intensity ratio (Pt3/Pt2) to be made in the above range. From such a viewpoint, the above content ratio (first curing agent/(first polyol resin + plasticizer)) is more preferably 0.4 to 2.7 and still more preferably 0.5 to 2.5.

The ratio (second curing agent/(second polyol resin + plasticizer)) of the content of the second curing agent in the second thermosetting resin composition to the total content of the second polyol resin and the plasticizer therein is preferably 0.3 to 2.0. When the above content ratio (second curing agent/(second polyol resin + plasticizer)) is 0.3 to 2.0, the tack strength of the resin layer can be made high further. From such a viewpoint, the above content ratio (second curing agent/(second polyol resin + plasticizer)) is more preferably 0.4 to 1.8 and still more preferably 0.5 to 1.6.

### <Colorant>

The second thermosetting resin composition may further contain a colorant. Due to that the second thermosetting resin composition contains a colorant, the resin layer can be colored, and the resin layer becomes a colored resin layer. Thereby, the aesthetic quality of the thermosetting resin sheet can be enhanced. Examples of the colorant include pigments, dyes and glittering materials. Examples of the pigments include metal oxide pigments such as titanium oxide and iron oxide, inorganic pigments such as carbon black, clay, kaolin, barium sulfate, barium carbonate, calcium carbonate, talc, silica and alumina white, and organic pigments such as azo-based, quinacridone-based, diketopyrrolopyrrole-based, perylene-based, perinone-based, benzimidazolone-based, vat-based, isoindoline-based, isoindolinone-based, metal chelate azo-based, phthalocyanine-based, indanthrone-based, dioxane-based, and indigo-based pigments. Examples of the dyes include azo-based, anthraquinone-based, indigoid-based, and stilbene-based dyes. Examples of the glittering materials include compounds in which a titanium oxide layer is provided on the surface of natural mica, synthetic mica, alumina flake, glass flake, or the like. These colorants can be used singly, or in combination of two or more.

The content of the active ingredient of the colorant in the second thermosetting resin composition, that is, the colorant excluding binder resins, dispersants and additives depends on the color of the colorant. For example, the content of a whitish colorant necessary for imparting a hiding property to the second thermosetting resin composition becomes much higher than the content of a blackish colorant therefor. For example, in the case where the colorant is a blackish colorant such as carbon black, the content thereof is, based on 100 parts by mass of the total content of the second polyol resin, the second curing agent and the plasticizer, for example, 0.5 parts by mass or higher, and preferably 1 part by mass or higher and more preferably 2 parts by mass or higher, and preferably 25 parts by mass or lower, more preferably 20 parts by mass or lower and still more preferably 12 parts by mass or lower.

### <Other components>

The first thermosetting resin composition and the second thermosetting resin composition each may contain components other than the above, and may contain, for example, additives other than the above. Examples of the additives include surface conditioners, defoaming agents, urethanizing catalysts, crosslinking agents, dispersants, inorganic fillers other than the pigments and the glittering materials, age resisters, antioxidants, and rust preventives.

The first thermosetting resin composition may contain, in addition to the first polyol resin and the first curing agent, a colorant, but it suffices if the first thermosetting resin composition contains no colorant, or even if containing a colorant, contains the colorant in so small an amount as not to inhibit the transparency, and it is preferable that the top coat layer be a so-called clear layer. The clear layer is a transparent layer; and being transparent refers to that the transmittance of light at a wavelength of 450 nm is 80% or higher. On the other hand, in the case where the second thermosetting resin composition contains a colorant, the resin layer becomes a colored resin layer, and it is preferable that the colored resin layer be an opaque layer.

### (Hydroxyl value)

The hydroxyl value of the top coat layer is preferably 50 mgKOH/g or higher and 300 mgKOH/g or lower. When the hydroxyl value of the top coat layer is 50 mgKOH/g or higher, the hardness of the top coat layer can be made high further. When the hydroxyl value of the top coat layer is 300 mgKOH/g or lower, the adhesive strength of the top coat layer to the resin layer can be made high further. From such a viewpoint, the hydroxyl value of the top coat layer is more preferably 60 mgKOH/g or higher and 250 mgKOH/g or lower and still more preferably 70 mgKOH/g or higher and 220 mgKOH/g or lower.

The hydroxyl value of the resin layer is preferably 20 mgKOH/g or higher and 140 mgKOH/g or lower. When the hydroxyl value of the resin layer is 20 mgKOH/g or higher, the strength of the resin layer can be made high further. When the hydroxyl value of the resin layer is 140 mgKOH/g or lower, the tack strength of the resin layer to a plate to be coated can be made high further. From such a viewpoint, the hydroxyl value of the resin layer is more preferably 40 mgKOH/g or higher and 120 mgKOH/g or lower and still more preferably 60 mgKOH/g or higher and 110 mgKOH/g or lower.

The hydroxyl value of the top coat layer is a weighted average of the hydroxyl values of the first polyol resin and the plasticizer contained in the first thermosetting resin composition. On the other hand, the hydroxyl value of the resin layer is a weighted average of the hydroxyl values of the second polyol resin and the plasticizer contained in the second thermosetting resin composition.

### (Logarithm (log(tan δ)) of the dynamic loss tangent)

The logarithm (log(tan δ)) of the dynamic loss tangent at 25°C of the thermosetting resin sheet of the present invention as measured by viscoelasticity measurement using a dynamic viscoelasticity analyzer (DMA) is 1 or lower. When the log(tan δ) at 25°C of the thermosetting resin sheet is 1 or higher, the top coat layer and the resin layer become compatibilized, causing such a disadvantage that the hardness of the top coat layer is lowered in some cases. Further, it becomes difficult for the thermosetting resin sheet to suitably secure the sheet shape, worsening the appearance in some cases. From such a viewpoint, the log(tan δ) at 25°C of the thermosetting resin sheet of the present invention as measured by viscoelasticity measurement using a DMA is preferably 0.5 or lower, more preferably 0.2 or lower and still more preferably 0.15 or lower. The lower limit value of the range of the log(tan δ) at 25°C of the thermosetting resin sheet of the present invention as measured by viscoelasticity measurement using the DMA is not especially limited, and is usually 0.05, and preferably 0.1 or higher and more preferably 0.12 or higher. The log(tan δ) at 25°C of the thermosetting resin sheet as measured by viscoelasticity measurement using a DMA can be measured by a method described in Examples described later. The log(tan δ) at 25°C of the thermosetting resin sheet as measured by viscoelasticity measurement using a DMA can be regulated by the hydroxyl value of the first polyol resin, the hydroxyl value of the second polyol resin, the weight-average molecular weight of the first polyol resin, the weight-average molecular weight of the second polyol resin, and the like. The higher the hydroxyl value of the first polyol resin, the hydroxyl value of the second polyol resin, the weight-average molecular weight of the first polyol resin, and the weight-average molecular weight of the second polyol resin become, the lower the value of the log(tan δ) of the thermosetting resin sheet becomes.

### (Total reflection infrared absorption spectrum)

The peak intensity ratio (Pt2/Pt1) of the thermosetting resin sheet of the present invention is 0.15 or higher and 0.60 or lower. Pt1 is a peak intensity of a first peak having an absorption maximum in the 2,920 ± 20 cm⁻¹ range in a total reflection infrared absorption spectrum of the top coat layer. The first peak is a reference peak. Since the first peak is a peak stable in peak intensity, the first peak is used as a reference peak. Pt2 is a peak intensity of a second peak having an absorption maximum in the 3,520 ± 30 cm⁻¹ range in the total reflection infrared absorption spectrum of the top coat layer. The second peak is a peak of hydroxyl groups. When the peak intensity ratio (Pt2/Pt1) is lower than 0.15, the amount of hydroxyl groups in the top coat layer becomes insufficient and the hardness of the top coat layer becomes low in some cases. When that is higher than 0.60, the amount of hydroxyl groups becomes too large and such a disadvantage as separation of the top coat layer from the other resin layer such as the resin layer occurs in some cases. From such a viewpoint, the peak intensity ratio (Pt2/Pt1) of the thermosetting resin sheet of the present invention is preferably 0.18 or higher and 0.55 or lower, more preferably 0.2 or higher and 0.50 or less and still more preferably 0.22 or higher and 0.45 or lower. The peak intensity of the first peak having an absorption maximum in the 2,920 ± 20 cm⁻¹ range in the total reflection infrared absorption spectrum of the top coat layer, and the peak intensity of the second peak having an absorption maximum in the 3,520 ± 30 cm⁻¹ range in the total reflection infrared absorption spectrum of the top coat layer can be measured by a method described in Examples described later. The peak intensity ratio (Pt2/Pt1) can be regulated by the hydroxyl value of the first polyol resin and the content of the first polyol resin. The above-mentioned peak intensities are peak intensities of the thermosetting resin sheet before being thermoset.

The peak intensity ratio (Pt3/Pt2) of the thermosetting resin sheet of the present invention is 6.0 or higher and 20.0 or lower. Pt3 is a peak intensity of a third peak having an absorption maximum in the 1,460 ± 20 cm⁻¹ range in the total reflection infrared absorption spectrum of the top coat layer. The third peak is a peak originated from blocked isocyanate. When the peak intensity ratio (Pt3/Pt2) is lower than 6.0 or higher than 20.0, the balance between the amounts of the polyol resin and the curing agent blended in the top coat layer is poor, and it becomes easy for such a disadvantage as lowering of the hardness of the top coat layer to be caused. From such a viewpoint, the peak intensity ratio (Pt3/Pt2) of the thermosetting resin sheet of the present invention is preferably 7.0 or higher and 18.0 or lower, more preferably 7.5 or higher and 17.0 or lower and still more preferably 8.0 or higher and 14.0 or lower. The peak intensity of the second peak having an absorption maximum in the 3,520 ± 30 cm⁻¹ range in the total reflection infrared absorption spectrum of the top coat layer, and the peak intensity of the third peak having an absorption maximum in the 1,460 ± 20 cm⁻¹ range in the total reflection infrared absorption spectrum of the top coat layer can be measured by a method described in Examples described later. The peak intensity ratio (Pt3/Pt2) can be regulated by the hydroxyl value of the first polyol resin, the content of the first polyol resin, the number of isocyanate groups of the first curing agent, the content of the first curing agent, and the like.

The peak intensity ratio (Pc2/Pc1) of the thermosetting resin sheet of the present invention is preferably 0.05 or higher and 0.35 or lower. Pc1 is a peak intensity of a first peak having an absorption maximum in the 2,920 ± 20 cm⁻¹ range in a total reflection infrared absorption spectrum of the resin layer. The first peak is a reference peak. Pc2 is a peak intensity of a second peak having an absorption maximum in the 3,520 ± 30 cm⁻¹ range in the total reflection infrared absorption spectrum of the resin layer. The second peak is a peak of hydroxyl groups. When the peak intensity ratio (Pc2/Pc1) is 0.05 or higher and 0.35 or lower, it becomes easy for the strength of the resin layer, also for the adhesive strength of the resin layer, to be made high. From such a viewpoint, the peak intensity ratio (Pc2/Pc1) of the thermosetting resin sheet of the present invention is preferably 0.06 or higher and 0.60 or lower, more preferably 0.07 or higher and 0.40 or lower and still more preferably 0.08 or higher and 0.18 or lower. The peak intensity of the first peak having an absorption maximum in the 2,920 ± 20 cm⁻¹ range in the total reflection infrared absorption spectrum of the resin layer, and the peak intensity of the second peak having an absorption maximum in the 3,520 ± 30 cm⁻¹ range in the total reflection infrared absorption spectrum of the resin layer can be measured by a method described in Examples described later. The peak intensity ratio (Pc2/Pc1) can be regulated by the hydroxyl value of the second polyol resin, the content of the second polyol resin, the content of the plasticizer, and the hydroxyl value of the plasticizer.

### (Thickness)

The thickness of the top coat layer is not especially limited, and is, for example, 10 µm or larger and 100 µm or smaller, and preferably 15 µm or larger and 50 µm or smaller. The thickness of the resin layer is not especially limited, and is, for example, 10 µm or larger and 100 µm or smaller, and preferably 15 µm or larger and 50 µm or smaller.

### (Structure of layers of the thermosetting resin sheet)

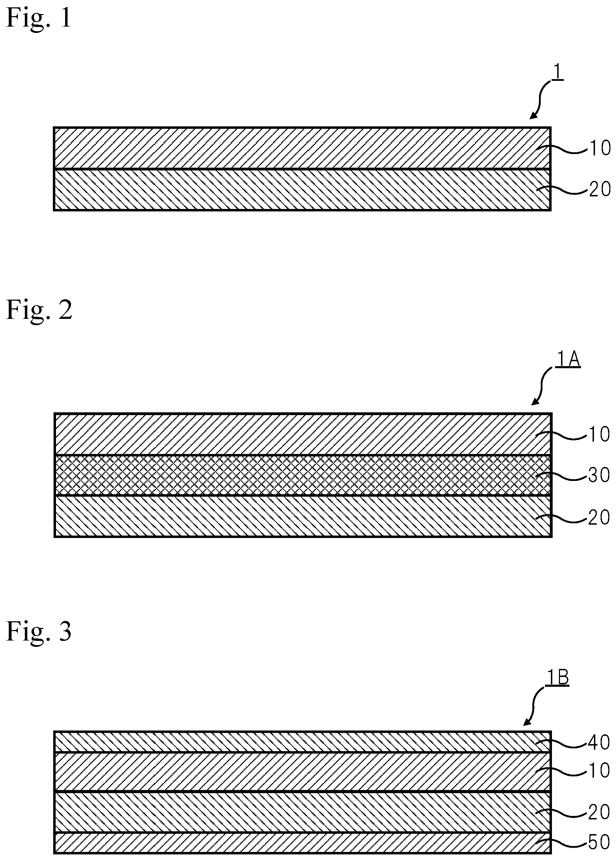

As shown in Fig. 1, a thermosetting resin sheet 1 may consist of a top coat layer 10 and a resin layer 20.

The other resin layer may be provided between a top coat layer and a resin layer. For example, as shown in Fig. 2, a thermosetting resin sheet 1A may be one having a top coat layer 10, a resin layer 20 and the other resin layer 30 provided between the top coat layer 10 and the resin layer 20. In the case where the other resin layer is provided, for the other resin layer, it suffices if a similar kind of material to the kind of the top coat layer or the resin layer is used and it is preferable that the other resin layer contain, for example, a polyol resin and a curing agent. By such a form, even when the other resin layer is provided between the top coat layer and the resin layer, the separation strength between each resin layer can be made high and occurrence of the interfacial separation between each resin layer can be prevented. The other resin layer may contain, in addition to a polyol resin and a curing agent, a colorant. By combining the resin layer containing a colorant and the other resin layer containing a colorant, the aesthetic quality of the thermosetting resin sheet can be enhanced further. The other resin layer may be of two or more layers.

### (Transfer layer)

The thermosetting resin sheet of the present invention may further have a transfer layer provided on the opposite side of the top coat layer to the resin layer side. For example, as shown in Fig. 3, a thermosetting resin sheet 1B may further have a transfer layer 40 provided on the opposite side of a top coat layer 10 to a resin layer side. The transfer layer to be used for the thermosetting resin sheet is a member for protecting the top coat layer from damaging and foreign matter adhesion. Further, as described later, the transfer layer is a member serving as a support when the top coat layer and the resin layer are bonded on an adherend, and typically serves as a support when the top coat layer and the resin layer of the thermosetting resin sheet are transferred on an adherend. it is preferable that the transfer layer be formed of a resin film. A resin to be used for the resin film includes thermoplastic resins.

Specific examples of the resin to be used for the resin film include cyclic polyolefin resins, polyolefin resins, polyester resins such as polybutylene terephthalate and polyethylene terephthalate, polyamide resins, polycarbonate resins, acrylic resins, fluororesins, soft polyvinyl chloride resins, polymethylpentene resins, and tetrafluoroethylene resins. Among these, preferable are cyclic polyolefin resins and polyolefin resins.

The cyclic polyolefin resin is a polymer having a structural unit originated from a cyclic olefin. The cyclic olefin includes tetracyclododecene, norbornene and cyclic conjugated dienes. The cyclic polyolefin resin may be a polymer of a cyclic olefin, or may be a copolymer of a cyclic olefin with an α-olefin, or may be a hydrogenated substance thereof. The α-olefin includes linear α-olefins having 1 to 12 or so carbon atoms, such as ethylene, propylene, butene-1, pentene-1, hexene-1, heptene-1 and octene-1, and among these, preferable is ethylene.

The polyolefin resin is a polyolefin resin other than the cyclic polyolefin resins, and specific examples thereof include polypropylene resins and polyethylene resins. Among these, preferable are polyethylene resins.

The polypropylene resin may be a homopropylene, or may be a copolymer of a propylene such as a random polypropylene with a small amount (for example, 10% by mass or smaller) of other α-olefins. The other α-olefins include linear α-olefins having 1 to 12 or so carbon atoms, such as ethylene, 1-butene, 1-pentene, 4-methyl-1-pentene, 1-hexene, 1-octene, 1-nonene and 1-decene.

The polyethylene resin includes low density polyethylene (LDPE, density: lower than 0.930 g/cm³), medium density polyethylene (MDPE, density: 0.930 g/cm³ or higher and lower than 0.942 g/cm³), high density polyethylene (HDPE, density: 0.942 g/cm³ or higher), and linear low density polyethylene (LLDPE).

The resin film may be a single-layer film composed of one layer, or may be a multilayer film of two or more layers. In a resin film constituting a release layer, resins contained in the resin film may be used singly, or in combination of two or more. In the case of using two or more resins, a multilayer film may be made by using each of different resins for each layer. Alternatively, a single-layer film may be formed by using a mixture of two or more resins, or one or more layers of a multilayer film may be formed by using a mixture of two or more resins.

The multilayer film includes ones in which layers composed of a cyclic polyolefin resin or a polyolefin resin and layers composed of a polyester resin are layered, and may also be, for example, one in which a polyester resin layer, a polyolefin resin layer and a polyester resin layer are layered in order.

Each layer in the transfer layer may contain additives other than the resins. The additives suffice if well-known additives blended in resin films are used. The additives specifically include nucleating agents, optical whitening agents, antioxidants, stabilizers, ultraviolet absorbents, surfactants, lubricants, fillers, crosslinking agents, crosslinking promoters, antistatic agents, fire retardants, dispersants, pigments, dyes, and processing aids.

The resin film may be a stretched resin film, or may be a non-stretched resin film, but preferable is a non-stretched resin film. Accordingly, the resin film is preferably a non-stretched cyclic polyolefin resin film or a non-stretched polyolefin resin film. Use of a non-stretched resin film makes it easy for the tensile elongation at break as described above to be regulated in a desired range and for occurrence of breakage, wrinkles and the like in vacuum forming to be prevented. The non-stretched resin film may be a multilayer film, and may also be, for example, as described above, a multilayer film having, in addition to a polyolefin resin layer, a polyester resin layer.

The transfer layer may be one at least one surface of which is release-treated with a release agent such as a silicone-based release agent or a fluorine-based release agent. In the case where the transfer layer is release-treated, it is preferable that the release-treated surface constitute the surface of the top coat layer side. Due to that the transfer layer is release-treated, it becomes easy for the releasability thereof from the top coat layer to be made favorable. The transfer layer, however, may not be release-treated as long as being capable of being released from the top coat layer.

The thickness of the transfer layer is not especially limited, and is, for example, 10 µm or larger and 1,000 µm or smaller, and preferably 30 µm or larger and 600 µm or smaller and more preferably 50 µm or larger and 400 µm or smaller.

### (Substrate)

The thermosetting resin sheet of the present invention may further have a substrate provided on the opposite side of the resin layer to the top coat layer side. For example, as shown in Fig. 3, a thermosetting resin sheet 1B may further have a substrate 50 provided on the opposite side of the resin layer 20 to the top coat layer side. The substrate to be used for the thermosetting resin sheet is a member for protecting the resin layer from damaging and foreign matter adhesion. It is preferable that the substrate be formed of a resin film. Examples of a resin to be used for the resin film include thermoplastic resins. Specific examples of the thermoplastic resins to be used for the substrate are the same as the resins usable for the above release layer, but among those, preferable are polyester resins.

The resin film may be a single-layer film composed of one layer, or may be a multilayer film of two or more layers. In a resin film constituting a release layer, resins contained in the resin film may be used singly, or in combination of two or more. In the case of using two or more resins, a multilayer film may be made by using each of different resins for each layer. Alternatively, a single-layer film may be formed by using a mixture of two or more resins, or one or more layers of a multilayer film may be formed by using a mixture of two or more resins.

Each layer in the substrate may contain additives other than the resins. Specific examples of the additives are as described in the transfer layer.

The resin film in the substrate may be a stretched resin film, or may be a non-stretched resin film, but preferable is a non-stretched resin film. Accordingly, the resin film is preferably a non-stretched polyester resin film. Use of a non-stretched resin film makes it easy for the tensile elongation at break as described above to be regulated in a desired range, and occurrence of breakage, wrinkles and the like in vacuum forming can be prevented.

The substrate may be one at least one surface of which is release-treated with a release agent such as a silicone-based release agent or a fluorine-based release agent. In the case where the substrate is release-treated, it is preferable that the release-treated surface constitutes the surface of the resin layer side. Due to that the substrate is release-treated, it becomes easy for the releasability thereof from the resin layer to be made favorable. The substrate, however, may not be release-treated as long as being capable of being released from the resin layer.

The thickness of the substrate is not especially limited, and is, for example, 10 µm or larger and 1,000 µm or smaller, and preferably 30 µm or larger and 700 µm or smaller and more preferably 50 µm or larger and 500 µm or smaller.

In the case where layers including the above-mentioned transfer layer and substrate, other than the top coat layer, the resin layer and the resin layer disposed therebetween, are provided, the viscoelasticity measurement and the reflection infrared absorption spectrum measurement are carried out after the transfer layer and the substrate are removed.

### [Method for manufacturing the thermosetting resin sheet]

The method for manufacturing the thermosetting resin sheet of the present invention comprises the following process A, process B and process C.

### (1) Process A

In a process A, a first coating material containing a first thermosetting resin composition containing a first polyol resin and a first curing agent is coated and dried on a transfer layer to thereby fabricate a first layered product having the transfer layer and a top coat layer provided on the transfer layer and formed of the first thermosetting resin composition. Since the first thermosetting resin composition, the transfer layer and the top coat layer have been described in the above mentioned "Thermosetting resin sheet" items, the interpretation of these will be omitted.

The first coating material may be one consisting of the first thermosetting resin composition, but from the viewpoint of enhancing workability such as coatability, it is preferable that the first thermosetting resin composition be diluted with a solvent. The solvent includes ethyl acetate, butyl acetate and toluene.

The drying carried out after the coating of the first coating material on the transfer layer is preferably drying comprising at least a regular drying process to be described later, and more preferably drying comprising carrying out a pre-drying process to be described later and the regular drying process in this order.

The drying temperature in the pre-drying process is preferably 50°C or higher and 70°C or lower and more preferably 55°C or higher and 65°C or lower. The drying time in the pre-drying process is preferably 1 min or longer and 30 min or shorter and more preferably 2 min or longer and 15 min or shorter.

The drying temperature in the regular drying process is preferably 85°C or higher and 130°C or lower and more preferably 90°C or higher and 120°C or lower. When the drying temperature is higher than these lower limit values, it becomes easy for the solvent to be suitably removed, and bubbling due to vaporization of the solvent or the like when the resin layer is cured is prevented. By making the drying temperature to be the upper limit values or lower, the thermosetting resin composition can be prevented from being cured more than necessary in the drying time.

The drying time in the regular drying process is preferably 1 min or longer and 30 min or shorter and more preferably 2 min or longer and 15 min or shorter. By making the drying time to be longer than the these lower limit values, it becomes easy for the solvent to be suitably removed, and bubbling due to vaporization of the solvent or the like when the resin layer is cured is prevented. Further, by making the drying time to be the these upper limit values or shorter, the thermosetting resin composition can be prevented from being cured more than necessary in the drying time.

Then, an initial curing may be carried out on the resin layer after being dried according to needs. The initial curing refers to curing of the thermosetting resin composition constituting the resin layer to a semi-cured state. The initial curing can be carried out by heating, and it suffices if the heating is carried out under the condition of at a heating temperature of 90°C or higher and 150°C or lower and for a heating time of about 2 min or longer and 5 min or shorter.

### (2) Process B

In a process B, a second coating material containing a second thermosetting resin composition containing a second polyol resin and a second curing agent is coated and dried on a substrate to thereby fabricate a second layered product having the substrate and a resin layer provided on the substrate and formed of the second thermosetting resin composition. Since the second thermosetting resin composition, the substrate and the resin layer have been described in the above mentioned "Thermosetting resin sheet" items, the interpretation of these will be omitted.

The second coating material may be one consisting of the second thermosetting resin composition, but from the viewpoint of enhancing workability such as coatability, it is preferable that the second thermosetting resin composition be diluted with a solvent. The solvent includes ethyl acetate, butyl acetate and toluene.

The drying carried out after the coating of the second coating material on the transfer layer is, as in the drying carried out after the first coating material is coated on the transfer layer, preferably drying comprising at least a regular drying process to be described later, and more preferably drying comprising carrying out a pre-drying process to be described later and the regular drying process in this order. Since the pre-drying process and the regular drying process have been described in the "Process A", the interpretation of these will be omitted.

### (3) Process C

In a process C, the first layered product and the second layered product are laminated so that the top coat layer and the resin layer mutually face each other. Consequently, a thermosetting resin sheet having a layered structure of the transfer layer/the top coat layer/the resin layer/the substrate can be manufactured. By thus manufacturing a decorative thermosetting sheet by laminating the first layered product and the second layered product, the compatibilization between the top coat layer and the resin layer can be prevented, whereby a good quality two-layer structure composed of the top coat layer and the resin layer can be obtained. Further, by separating the transfer layer and the substrate from this thermosetting resin sheet, a thermosetting resin sheet composed of the top coat layer and the resin layer can be manufactured.

As described above, in the case where the other resin layer is further provided between the top coat layer and the resin layer, first, a third layered product is fabricated by forming the other resin layer on a release film or the like separately provided. Then, the other resin layer is formed on the top coat layer of the first layered product by laminating the third layered product on the first layered product, or the other resin layer is formed on the resin layer of the second layered product by laminating the third layered product on the second layered product. Thereafter, as in the above mentioned process C, a thermosetting resin sheet having the top coat layer, the resin layer and the other resin layer provided between the top coat layer and the resin layer can be manufactured by laminating the first layered product and the second layered product. At that time, it suffices if the release film is separated after or before the other resin layer is laminated on the second resin layer or the first resin layer. The release film to be used suffices if it is a release polyethylene terephthalate film (release PET film) or the like.

Also by a manufacturing method other than the method for manufacturing the thermosetting resin sheet described above, the thermosetting resin sheet of the present invention can be manufactured.

### [Method of using the thermosetting resin sheet]

The thermosetting resin sheet of the present invention is a sheet for forming decorated bodies with coating or the like on various types of articles (adherends), and is bonded on the adherends and used. Specifically, it suffices if the thermosetting resin sheet is, after the substrate is separated, bonded on an adherend through the resin layer, and the thermosetting resin sheet bonded on the adherend is heated. A method of separating the substrate is not especially limited, and the separation may be carried out by a separation device, or may be carried out manually. The pasting of the thermosetting resin sheet on an adherend is not especially limited, and may be carried out by manual pasting using a squeegee or the like, or may be carried out by using a laminator. By heating the thermosetting resin sheet, the top coat layer and the resin layer are cured to thereby form a decorated body of the cured top coat layer and resin layer.

The transfer layer is, after the substrate is separated, separated and removed, but typically, it suffices if after the transfer layer is separated, the thermosetting resin sheet is heated as described above to thereby cure the top coat layer and the resin layer. Further, it preferably suffices if the transfer layer is, after the thermosetting resin sheet is bonded on an adherend through the resin layer, separated from the top coat layer. Thereby, the transfer layer serves as a support for supporting the top coat layer and the resin layer when the thermosetting resin sheet is bonded on the adherend. A method of separating the transfer layer is not especially limited, and the separation may be carried out by a separation device, or may be carried out manually.

Further, the separation of the transfer layer may be carried out at ordinary temperature or a temperature near thereto (about 15 to 35°C), and may be carried out after the top coat layer is cooled.

The thermosetting resin sheet of the present invention may be bonded on an adherend after being pre-formed so as to have the shape corresponding to a shape of the adherend by vacuum forming, press forming, pressure forming or the like. In the case of carrying out the pre-forming, the pre-forming may be carried out on the thermosetting resin sheet before the substrate is separated from the resin layer, or may be carried out after the substrate is separated from the resin layer. By carrying out the pre-forming, even when the adherend has a complicated shape, the thermosetting resin sheet can easily be bonded closely on the adherend. The pre-forming is carried out, in the above, preferably by vacuum forming. The pre-forming suffices if the thermosetting resin sheet is made to pressure contact with a jig or a metal mold by vacuum forming and the thermosetting resin sheet is shaped into a shape corresponding to the surface shape of the adherend while the thermosetting resin sheet is elongated along the jig or the metal mold.

Here, the vacuum forming is preferably TOM forming. TOM is "Three Dimension Overlay Method", and application of TOM forming enables shaping into complicated shapes.

The adherend on which the thermosetting resin sheet of the present invention is bonded is not especially limited, and examples thereof include electric appliances, vehicles such as automobiles and transportation equipment, vehicle components for automobiles and transportation equipment, sundries, exterior members for heavy machines, vessels, airplanes and the like, outer walls and roof materials of residences and buildings, bridges, steel frames, plants, and wind power generation blades. Examples of the vehicle components include vehicular interior members and vehicular exterior members. Among these, vehicles and vehicle components are preferable; vehicle components are more preferable; and vehicular exterior members are still more preferable. Examples of the vehicular exterior members include hoods, roofs, door panels, bumpers, fuel filler panels, trunk lids, and rear gates. In the case where the thermosetting resin sheet of the present invention is bonded on vehicular exterior members, the thermosetting resin sheet may be bonded on an exterior member attached to a vehicle body, or may be bonded on an exterior member before being attached on a vehicle body.

The material of the adherend is not especially limited, and may be any of resin materials, inorganic materials such as ceramics, and metal materials such as steels; but, among these, metal materials such as steels are preferable. Although simultaneous coating with molding of an adherend in insert molding using a metal material such as a steel is difficult and the coating using a resin sheet is difficult, by using the thermosetting resin sheet of the present invention, the coating is easily applied also on such a material.

### [Vehicle, vehicle component, manufacturing method of vehicle, manufacturing method of vehicle component]

The vehicle and the vehicle component of the present invention are those coated with the thermosetting resin sheet of the present invention. Accordingly, the method for manufacturing the vehicle of the present invention and the method for manufacturing the vehicle component of the present invention comprise a process of coating using the thermosetting resin sheet of the present invention. The coating process suffices if the coating is carried out by the method described in the above mentioned method of forming coating.

### Examples

Hereinafter, the present invention will be described in more detail by way of Examples, but the present invention is not any more limited to these Examples.

Measurement methods and evaluation methods in the present Examples were as follows.

### (Total reflection infrared absorption spectrum)

For each surface of a top coat layer and a resin layer of a thermosetting resin sheet, a total reflection infrared absorption spectrum was measured by an ATR (attenuated total reflection) method using an infrared absorption spectrum analyzer FT/IR Nicolet iS5 (manufactured by Yamato Scientific Co. Ltd.) and using a diamond prism (iD7). The measurement was carried out at a measurement range of 4,000 to 400 cm⁻¹, the number of integrations of 32 times and a resolution of 4 cm⁻¹.

### (Dynamic loss tangent (tan δ))

The dynamic loss tangent (tan δ) at 25°C was measured by viscoelasticity measurement using a dynamic viscoelasticity analyzer ("DVA-200", manufactured by IT Keisoku Seigyo K.K.). The measurement was carried out under the condition of using the shear mode, and at a frequency of 10 Hz and a strain of 0.02%.

### (Hardness of a coating film after being baked)

A thermosetting resin sheet obtained in each of Examples and Comparative Examples was, after a substrate was separated, bonded on a steel plate through resin layers, and thereafter, a transfer layer was separated. The resin layers (top coat layer and resin layer) bonded on the steel plate were heated at 140°C for 30 min to thereby be cured. For the surface of the obtained cured material, the pencil hardness was measured according to JIS K5600-5-4, and evaluated according to the following criteria.

### <Evaluation criteria>

A: no scratches were formed during the pencil hardness test using HB.
B: scratches were formed during the pencil hardness test using HB, but no scratches were formed during the pencil hardness test using B.
C: scratches were formed during the pencil hardness test using B.

### (Appearance after baking)

A decorative thermosetting resin sheet obtained in each of Examples and Comparative Examples was, after a substrate was separated, bonded on a steel plate through a second resin layer, and thereafter, a transfer layer was separated. Resin layers (first resin layer and second resin layer) bonded on the steel plate were heated at 140°C for 30 min to thereby be cured. The appearance of the obtained cured material was evaluated according to the following criteria.

### <Evaluation criteria>

A: a colored layer and a clear layer did not mingle and a two-layer structure could be confirmed.
B: a colored layer and a clear layer mingled and a two-layer structure could not be confirmed.

### (Adhesive strength to a substrate)

A strip test piece of 150 mm in length and 25 mm in width of a decorative thermosetting resin sheet obtained in each of Examples and Comparative Examples was fabricated. After a substrate was separated, the strip test piece was bonded on a urethane-coated plate test piece through a second resin layer, and thereafter, a transfer layer was separated. A single-sided tape was adhered thereon so as to contact with a first resin layer. The peel force when the single-sided tape/the first resin layer/the second resin layer were subjected to a peal test at a stroke according to the 90° peel test method of JIS Z0237 was measured and evaluated according to the following criteria.

### <Evaluation criteria>

A: The peel force was 0.5 N/25 mm or higher.
B: The peel force was 0.3 N/25 mm or higher and lower than 0.5 N/25 mm.
C: The peel force was lower than 0.3 N/25 mm.

Each component of a film for transfer layers, a film for substrates, and resin layers used in Examples and Comparative Examples was as follows.

### <Film for transfer layers>

A non-stretched cyclic polyolefin film ("Decofit Q17CK", manufactured by Toray Industries, Inc., thickness: 100 µm), tensile elongation at break at 100°C (MD: 1,850%, TD: 1,850%)

### <Film for substrate layers>

A non-stretched polyethylene terephthalate film ("A-PET", manufactured by Nakamoto Packs Co. Ltd., thickness: 200 µm), tensile elongation at break at 100°C: (MD: 1,200%, TD: 980%)

### <Polyol resins>

An acrylic polyol resin (1): weight-average molecular weight: 240,000, hydroxyl value: 40 mgKOH/g, solid content concentration (NV): 30% by mass (solvent: ethyl acetate)
An acrylic polyol resin (2): weight-average molecular weight: 250,000, hydroxyl value: 80 mgKOH/g, solid content concentration (NV): 30% by mass (solvent: ethyl acetate)
An acrylic polyol resin (3): weight-average molecular weight: 250,000, hydroxyl value: 110 mgKOH/g, solid content concentration (NV): 30% by mass (solvent: ethyl acetate)
An acrylic polyol resin (4): weight-average molecular weight: 320,000, hydroxyl value: 170 mgKOH/g, solid content concentration (NV): 30% by mass (solvent: ethyl acetate)
An acrylic polyol resin (5): weight-average molecular weight: 250,000, hydroxyl value: 200 mgKOH/g, solid content concentration (NV): 30% by mass (solvent: ethyl acetate)

### <Plasticizer>

A (meth)acrylic polymer having hydroxyl groups, "ARUFON UH-2041", manufactured by Toagosei Co. Ltd., weight-average molecular weight: 2,500, hydroxyl value: 120 mgKOH/g, solid content concentration (NV): 100% by mass, glass transition temperature: -50°C

### <Pigment (colorant)>

"NSP-UP 841B", manufactured by Nikko Bics Co. Ltd., active pigment concentration: 9% by mass, solid content concentration (NV): 24% by mass

### <Catalyst>

Dibutyltin dilaurate (DBTDL), solid content concentration (NV): 100% by mass

### <Curing agent>

A hexamethylene diisocyanate-based blocked isocyanate (HDI-based), blocking agent: 3,5-dimethylpyrazole (DMP), solid content concentration (NV): 70%, solvent: ethyl acetate, reaction initiation temperature: 120°C

### [Fabrication of thermosetting resin compositions A to Q]

Coating materials of thermosetting resin compositions A to Q were each fabricated by adding each component in the formulation indicated in Table 1 and adding ethyl acetate as a solvent so that the solid content concentration became 30% by mass.

### [Example 1]

The thermosetting resin composition A was coated on the surface of the film for transfer layers by an applicator, thereafter subjected to a pre-drying process under the condition of at a drying temperature of 60°C and for a drying time of 30 min, and thereafter subjected to a regular drying process under the condition of at a drying temperature of 90°C and for a drying time of 5 min to thereby form a first resin layer of 30 µm in thickness on a transfer layer.

Then the thermosetting resin composition G was coated on the surface of the film for substrates by an applicator, thereafter subjected to a pre-drying process under the condition of at a drying temperature of 60°C and for a drying time of 30 min, and thereafter subjected to a regular drying process under the condition of at a drying temperature of 90°C and for a drying time of 5 min to thereby form a second resin layer of 30 µm in thickness on a substrate. The top coat layer on the transfer layer and the resin layer on the substrate were laminated at 25°C to thereby obtain a layered product in which the transfer layer, the top coat layer, the resin layer and the substrate were layered in order. By using the obtained layered product, the above evaluations were made. The evaluation results are shown in Table 2.

### [Examples 2 to 12, Comparative Examples 1 to 4]

The same procedure as in Example 1 was carried out, except for altering the compositions of thermosetting resin compositions as indicated in Table 1. The evaluation results are shown in Table 2.

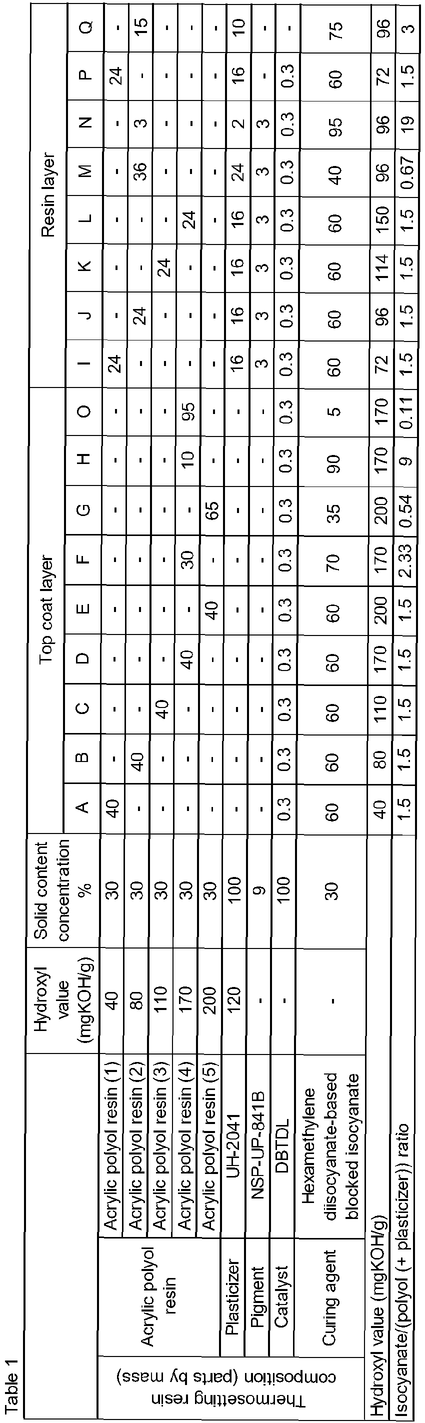

* In Table 1, the amount of each component in the thermosetting resin compositions A to K was in terms of solid content; and the total solid content of the acrylic polyol resin, the plasticizer and the curing agent was taken to be 100 parts by mass.
* The amount of the active component of the pigment was a value in Table 1 multiplied by 9/24.
* The hydroxyl value of the resin layer was a weighted average of the hydroxyl value of the acrylic polyol resin and the hydroxyl value of the plasticizer.

**Table 2**

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|---|---|
| Constitution | Top coat layer | Thermosetting resin composition | B | C | D | E | F | G | D | D | D | D | F | G | A | H | H | O |
| | Resin layer | Thermosetting resin composition | I | I | I | I | I | I | J | K | L | M | Q | P | I | I | N | I |
| Peak intensity ratio (Pt2/Pt1) | | | 0.163 | 0.212 | 0.254 | 0.32 | 0.199 | 0.442 | 0.244 | 0.257 | 0.233 | 0.241 | 0.202 | 0.437 | 0.124 | 0.131 | 0.122 | 0.41 |
| Peak intensity ratio (Pt3/Pt2) | | | 12.59 | 12.66 | 13.87 | 13.95 | 16.99 | 8.27 | 12.87 | 12.75 | 12.89 | 12.99 | 17.01 | 8.11 | 13.25 | 22.49 | 23.14 | 5.1 |
| Peak intensity ratio (Pc2/Pc1) | | | 0.109 | 0.112 | 0.092 | 0.125 | 0.101 | 0.088 | 0.166 | 0.194 | 0.382 | 0.391 | 0.272 | 0.089 | 0.151 | 0.143 | 0.123 | 0.155 |
| Logarithm of dynamic loss tangent (log(tan δ)) | | | 0.098 | 0.112 | 0.129 | 0.126 | 0.135 | 0.101 | 0.129 | 0.132 | 0.122 | 0.113 | 0.41 | 0.103 | 0.141 | 0.905 | 1.2 | 0.144 |
| Hardness of coating film after being baked | | | B | B | A | A | B | A | A | A | A | A | B | A | C | C | C | C |
| Appearance after being baked | | | A | A | A | A | A | A | A | A | A | A | A | A | A | A | B | A |
| Adhesive strength to substrate | | | A | A | A | A | A | A | A | B | C | C | A | A | A | A | A | A |

By comparing Examples 1 to 12 with Comparative Examples 1 to 4, it has been found that by making the log(tan δ) to be 1 or lower, the peak intensity ratio (Pt2/Pt1) to be 0.15 or higher and 0.60 or lower, and the peak intensity ratio (Pt3/Pt2) to be 6.0 or higher and 20.0 or lower, the hardness of the top coat layer could be enhanced.

### Reference Signs List

1, 1A, 1B THERMOSETTING RESIN SHEET
10 TOP COAT LAYER
20 RESIN LAYER
30 OTHER RESIN LAYER
40 TRANSFER LAYER
50 SUBSTRATE

## Claims

1. A thermosetting resin sheet comprising, at least, a top coat layer formed of a first thermosetting resin composition; and a resin layer formed of a second thermosetting resin composition, the logarithm (log(tan δ)) of the dynamic loss tangent at 25°C of the thermosetting resin sheet measured by viscoelasticity measurement using a dynamic viscoelasticity analyzer (DMA) being 1 or lower, the first thermosetting resin composition comprising a first polyol resin and a first curing agent, the second thermosetting resin composition comprising a second polyol resin and a second curing agent, a peak intensity ratio (Pt2/Pt1) of a peak intensity (Pt2) of a second peak having an absorption maximum in the 3,520 ± 30 cm⁻¹ range in a total reflection infrared absorption spectrum of the top coat layer to a peak intensity (Pt1) of a first peak having an absorption maximum in the 2,920 ± 20 cm⁻¹ range in the total reflection infrared absorption spectrum of the top coat layer being 0.15 or higher and 0.60 or lower, and a peak intensity ratio (Pt3/Pt2) of a peak intensity (Pt3) of a third peak having an absorption maximum in the 1,460 ± 20 cm⁻¹ range in the total reflection infrared absorption spectrum of the top coat layer to the peak intensity (Pt2) of the second peak in the total reflection infrared absorption spectrum of the top coat layer being 6.0 or higher and 20.0 or lower.

2. The thermosetting resin sheet according to claim 1, wherein a peak intensity ratio (Pc2/Pc1) of a peak intensity (Pc2) of a second peak having an absorption maximum in the 3,520 ± 30 cm⁻¹ range in a total reflection infrared absorption spectrum of the resin layer to a peak intensity (Pc1) of a first peak having an absorption maximum in the 2,920 ± 20 cm⁻¹ range in the total reflection infrared absorption spectrum of the resin layer is 0.05 or higher and 0.35 or lower.

3. The thermosetting resin sheet according to claim 2, wherein the second thermosetting resin composition further comprises a colorant.

4. The thermosetting resin sheet according to any one of claims 1 to 3, wherein weight-average molecular weights of the first polyol resin and the second polyol resin are each 50,000 or higher and 1,000,000 or lower.

5. The thermosetting resin sheet according to any one of claims 1 to 4, wherein the first polyol resin and the second polyol resin each comprise at least a (meth)acrylic resin having a plurality of hydroxyl groups.

6. The thermosetting resin sheet according to any one of claims 1 to 5, wherein reaction initiation temperatures of the first curing agent and the second curing agent are each 180°C or lower.

7. A vehicle coated with a thermosetting resin sheet according to any one of claims 1 to 6.

8. A vehicle component coated with a thermosetting resin sheet according to any one of claims 1 to 6.

9. A method for manufacturing a vehicle, comprising a process of coating with a thermosetting resin sheet according to any one of claims 1 to 6.

10. A method for manufacturing a vehicle component, comprising a process of coating with a thermosetting resin sheet according to any one of claims 1 to 6.
